# EUROPÄISCHE PATENTSCHRIFT

(11) **EP 1 794 361 B1**
(45) Veröffentlichungstag und Bekanntmachung des Hinweises auf die Patenterteilung: **16.11.2011**
(21) Anmeldenummer: 05789323.2
(22) Anmeldetag: 19.09.2005
(51) Int. Cl.: D06N 7/00, B32B 5/24, B29C 44/12, B60N 3/04

(54) **HINTERSCHÄUMTES TEPPICHFORMTEIL FÜR KRAFTFAHRZEUGE UND VERFAHREN ZU DESSEN HERSTELLUNG**
FOAM-LAMINATED CARPET SHAPED PART FOR MOTOR VEHICLES AND METHOD FOR THE PRODUCTION THEREOF
PARTIE SE PRESENTANT SOUS LA FORME D'UN TAPIS LAMINEE PAR MOUSSAGE POUR VEHICULES A MOTEUR ET PROCEDE DE PRODUCTION ASSOCIE

(30) Priorität: 22.09.2004 DE 102004046201
(43) Veröffentlichungstag der Anmeldung: 13.06.2007
(73) Patentinhaber: EFA Entwicklungsgesellschaft für Akustik mbH, 58454 Witten (DE)
(72) Erfinder: VOLLMERT, Herbert, 41334 Nettetal (DE)
(74) Vertreter: von Kreisler Selting Werner
(86) Internationale Anmeldenummer: PCT/EP2005/010075
(87) Internationale Veröffentlichungsnummer: WO 2006/032433

(56) Entgegenhaltungen:
- EP-A- 0 303 948
- EP-A- 0 384 420
- DE-A1- 3 034 799
- DE-A1- 3 104 835
- DATABASE WPI Section Ch, Week 198939 Derwent Publications Ltd., London, GB; Class A18, AN 1989-282692 XP002356703 & JP 01 207477 A (HAYASHI TEREMP KK) 21. August 1989 (1989-08-21)

## Beschreibung

Die Erfindung betrifft ein Abdichtfolien- oder Schwerschichtfolien-freies Teppichformteil für Kraftfahrzeuge, mit einer textilen, luftdurchlässigen Teppichschicht, einer mit der Unterseite der Teppichschicht verbundenen Sperrschicht gegen Schaumdurchschlag und einem an die Sperrschicht angeschäumten Schaumstoffrücken, wobei der Schaumstoffrücken durch Hinterschäumen der Sperrschicht in einem Schäumwerkzeug gebildet ist.

Um beim Hinterschäumen von Teppichware ein Durchschlagen des Schaumstoffs an der Sichtseite des Teppichs zu verhindern, wird die Rückseite der Teppichware üblicherweise mit einer Sperrschicht in Form einer Abdichtfolie versehen.

Aus der DE 38 00 779 A1 ist ein verformbarer Teppichboden für Kraftfahrzeuge bekannt, der eine Trägerschicht aus Filz mit eingenadelten Tuftingnoppen aufweist, auf deren Rückseite eine geschäumte Latexschicht, darauf folgend eine dichte Sperrschicht und darauf schließlich eine geschäumte Rückenbeschichtung aufgebracht sind. Die Sperrschicht ist dort von einer Folie oder einem Aufstrich aus ungeschäumten Latex gebildet.

Die EP 0 384 420 B1 offenbart eine Bodenverkleidung für Kraftfahrzeuge mit einer Trägerschicht aus Vlies, in die Flor oder Filamente durch Tuften eingebracht sind, wobei unter der Trägerschicht eine akustisch wirksame Schicht angeordnet ist, die aus mindestens einer Schicht aus einem thermoverformbaren, geschäumten Kunststoff und aus mindestens einer Schicht aus einem Vlies besteht. Der Flor bzw. die Filamente sind durch den geschäumten Kunststoff der akustisch wirksamen Schicht eingebunden. Die akustisch wirksame Schicht ist hinterschäumt, wobei in einem Ausführungsbeispiel zwischen der akustisch wirksamen Schicht und der Hinterschäumung ein Abdichtvlies mit einem Flächengewicht von 80 g/m² aufkaschiert ist. In einem anderen Ausführungsbeispiel dieser bekannten Bodenverkleidung ist zwischen der akustisch wirksamen Schicht und der Hinterschäumung eine Schwerschicht angeordnet, die zugleich als Abdichtschicht zur Vermeidung von Durchschüssen beim Hinterschäumvorgang zur Herstellung der Rückenbeschichtung dient. Die Herstellung der akustisch wirksamen Schicht erfolgt in der Weise, dass auf einer Vliesschicht direkt eine Schicht aus thermoverformbarem und akustisch offenem Kunststoff aufgeschäumt wird. Dieser Schichtaufbau wird als Endlosband hergestellt und zum Transport für die Weiterverarbeitung aufgerollt.

Diese bekannten Bodenverkleidungen haben den Nachteil, dass die Anzahl ihrer verschiedenen Materialschichten relativ hoch ist. Dadurch ergeben sich entsprechend hohe Materialkosten sowie hohe Herstellungskosten bei der Handhabung der Schichten bzw. ihrer Verbindung. Dies gilt insbesondere in Bezug auf die Abdichtfolien bzw. Schwerschichtfolien, die eine Schallabsorption von störendem Luftschall aus dem Fahrgastraum in den eigentlich als Schallabsorber nutzbaren Schaumstoffrücken weitgehend verhindern. Zudem führt der Einsatz von Abdicht- oder Schwerschichtfolien zu einem relativ hohen Gewicht der Bodenverkleidung, was hinsichtlich einer Reduzierung des Kraftstoffverbrauchs der damit ausgerüsteten Kraftfahrzeuge von Nachteil ist.

Der vorliegenden Erfindung liegt die Aufgabe zugrunde, ein Teppichformteil der eingangs genannten Art bereit zu stellen, das bei geringem Gewicht und verringerten Kosten eine hohe luftschallabsorbierende Wirkung aufweist. Des weiteren soll ein Verfahren zur Herstellung eines entsprechenden Teppichformteils angegeben werden.

Diese Aufgabe wird durch ein Teppichformteil mit den Merkmalen des Anspruchs 1 und durch ein Verfahren mit den Merkmalen des Anspruchs 17 gelöst.

Die Erfindung ist im wesentlichen **dadurch gekennzeichnet, dass** anstelle einer Abdicht- oder Schwerschichtfolie ein feinfaseriges Nadelvlies bzw. ein Nadelfilz als Schaumsperrschicht verwendet wird, das bzw. der aus Chemiefasern mit einer Feinheit kleiner 6,7 dtex sowie Bikomponenten-Schmelzklebefasern hergestellt ist und ein Flächengewicht im Bereich von 600 bis 900 g/m² aufweist.

Bei dem erfindungsgemäßen Teppichformteil wird auf den Einsatz sowohl von Abdichtfolien als auch von Schwerschichtfolien verzichtet. Hierdurch lässt sich eine erhebliche Gewichtsreduzierung bei einem gattungsgemäßen Teppichformteil erreichen. Auch lassen sich hierdurch die Material- und Herstellungskosten für ein gattungsgemäßes Teppichformteil verringern. Ferner bleibt das erfindungsgemäße Teppichformteil durch den Verzicht auf Abdicht- bzw. Schwerschichtfolien akustisch offen, so dass sein Schaumstoffrücken als zusätzlicher Schallabsorber genutzt wird.

Bei einer bevorzugten Ausgestaltung des erfindungsgemäßen Teppichformteils setzen sich die Chemiefasern des Nadelvlieses bzw. Nadelfilzes aus Polyesterfasern oder einer Kombination aus Polyesterfasern und Polypropylenfasern zusammen.

Nadelvliese aus Polyesterfasern (PET) zeichnen sich durch eine gute Thermoverformbarkeit aus. Verformte Polyestervliese besitzen eine hervorragende Formbeständigkeit bei hohen Umgebungstemperaturen. Zudem sind Polyesterfasern fäulnisresistent. Polypropylenfasern (PP) zeigen praktisch keine Feuchtigkeitsaufnahme und haben eine sehr hohe Beständigkeit gegen Säuren und Laugen sowie eine hohe Beständigkeit gegenüber Mikroorganismen.

Eine andere vorteilhafte Ausgestaltung des erfindungsgemäßen Teppichformteils besteht darin, dass bei einer eine Trägerschicht mit darin eingearbeiteten Polfäden aufweisenden Teppichschicht die Polfäden latexfrei mittels eines als Dispersion aufgetragenen thermoplastischen Feinpulverklebers in die Trägerschicht eingebunden sind, wobei der thermoplastische Kleber auch zur Verklebung der Sperrschicht mit den Unterschlingen der Polfäden dient. Die Menge des als Dispersion aufgetragenen Feinpulverklebers wird dabei so gewählt, dass der Kleber im verfestigten Zustand eine akustisch offene, netzartige Struktur aufweist.

Die übliche Filamenteinbindung durch Auftragen von Latex erweist sich sowohl bei der Herstellung als auch beim Recycling von Tufting-Teppichen als nachteilig. Bei der Herstellung kommt es zu nicht unerheblichen Emissionen von organischen Substanzen, die beim vernetzenden Ausreagieren des Latexvorstrichs freigesetzt werden. Zudem ist Latex auch im verfestigten Zustand nicht geruchsfrei. Sein typischer Geruch wird häufig als störend empfunden. Des weiteren lassen sich einen LatexVorstrich bzw. Latex-Rücken aufweisende Tufting-Teppiche nur sehr schwierig recyceln, da eine sortenreine Trennung der Polfäden vom Latex kaum möglich ist.

Das anstelle von Latex verwendete thermoplastische Feinpulver bewirkt nicht nur eine ausreißfeste Einbindung der Polfäden in die Trägerschicht, es ermöglicht auch den Verzicht auf einen zusätzlichen Kaschierkleber hinsichtlich des mit der Teppichoberware zu verbindenden, als Schaumsperrschicht dienenden Nadelvlieses. Darüber hinaus ermöglicht das thermoplastische Feinpulver auch eine schnelle Umformung des Teppichs in die gewünschte Form und trägt vorteilhaft zur erforderlichen Steifigkeit des fertigen Teppichformteils bei. Durch die Verwendung von Vliesware für die Trägerschicht und die Sperrschicht sind sehr hohe Verstreckungsgrade beim Umformen realisierbar.

Die Trägerschicht kann nach einer weiteren vorteilhaften Ausgestaltung des erfindungsgemäßen Teppichformteils Schmelzklebefasern in Form von Bikomponentenfasern enthalten. Mit Bikomponentenfasern in feinen Titern lassen sich relativ leichte und dünne Vliese herstellen. Die Bikomponenten-Schmelzklebefasern verbessern die Verankerung (Einbindung) der eingenadelten Polfaden-Noppen in der Trägerschicht sowie die Formbeständigkeit des fertigen Teppichformteils.

Weitere bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Es zeigen in schematischer Darstellung:
- Fig. 1: eine Schnittansicht eines Abschnitts eines erfindungsgemäßen Teppichformteils nach einem ersten Ausführungsbeispiel;
- Fig. 2: eine Schnittansicht eines Abschnitts eines erfindungsgemäßen Teppichformteils nach einem zweiten Ausführungsbeispiel;
- Fig. 3: eine Schnittansicht eines Formwerkzeuges zum Heißprägen eines Teppichformteils; und
- Fig. 4: eine Schnittansicht eines Schäumwerkzeuges zum Hinterschäumen eines Teppichformteils.

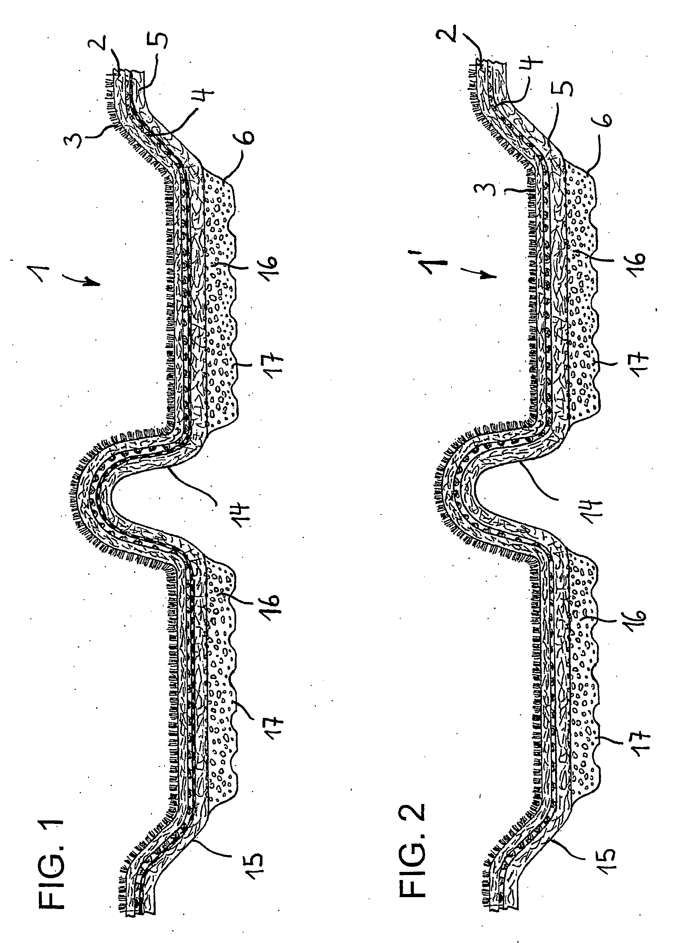

Bei den in den Figuren 1 und 2 schematisch dargestellten Teppichformteilen 1, 1' handelt es sich um akustisch wirksame Teppichbodenformteile für den Einbau in Kraftfahrzeuge. Die Teppichformteile 1, 1' weisen jeweils eine aus einer Vliesware gebildete Trägerschicht 2 auf, in die Polfäden 3 als Fasern, Garne oder Zwirne durch Tuften eingearbeitet sind. Die Polfäden 3 sind an der Sichtseite vorzugsweise aufgeschnitten, so dass eine Velours-Teppichware vorliegt. Alternativ kann es sich bei dem Tufting-Teppich aber auch um einen Schlingenteppich mit geschlossenen Flornoppen handeln. Die Polfäden 3 bestehen vorzugsweise aus Polyamid, Polypropylen und/oder Polyester. Bei dem Material des textilen Tuftträgers 2 handelt es sich vorzugsweise um Polyester und/oder Polypropylen. Die Grammatur der aus Tuftträger 2 und Polfäden 3 bestehenden Teppichoberware liegt vorzugsweise im Bereich von 250 bis 350 g/m².

Alternativ kann bei dem erfindungsgemäßen Teppichformteil auch eine Dilours-Teppichware als Teppichschicht zum Einsatz kommen.

Bei dem in Fig. 1 gezeigten Ausführungsbeispiel ist die Trägerschicht 2 zur Einbindung der Polfäden 3 rückseitig latexiert. Die Menge des aufgetragenen Latex-Vorstrichs 4 ist so gewählt, dass der Latex im verfestigten Zustand eine luftdurchlässige, netzartige Struktur bildet. Es wird beispielsweise Styrol-Butadien-Latex (SBR-Latex) verwendet, der eine relativ hohe Affinität zu Polyamid aufweist. Diese Anziehungswirkung begünstigt die Ausbildung der offenen, netzartigen Struktur. Die trocken aufgetragene Latexmenge liegt im Bereich von 50 bis 70 g/m².

Auf die latexierte Teppichoberware folgt ein mit den Unterschlingen der Polfäden 3 verklebtes feintitriges Nadelvlies 5, das mit Schaumstoff 6 hinterschäumt ist. Das luftdurchlässige Nadelvlies 5 wirkt als Sperrschicht gegen einen Durchschlag von Schaumstoff 6 an der Sichtseite der Teppichoberware. Bei dem Nadelvlies 5 kann es sich insbesondere um einen Nadelfilz handeln. Soweit nachfolgend von Nadelvlies die Rede ist, ist damit alternativ auch Nadelfilz gemeint.

Das Nadelvlies bzw. der Nadelfilz 5 ist aus Chemiefasern, die einen Titer von höchstens 6,7 dtex, vorzugsweise höchstens 5 dtex aufweisen, und Bikomponenten-Schmelzklebefasern hergestellt. Mit zunehmender Feinheit der Chemiefasern (bei konstanter Grammatur) erhöht sich die flächenspezifische Faseranzahl und damit die Durchschlagsfestigkeit des Nadelvlieses/Nadelfilzes 5. Besonders bevorzugt ist ein Nadelvlies oder Nadelfilz 5, dessen Chemiefasern feiner sind als 4 dtex, insbesondere ein Nadelvlies bzw. Nadelfilz 5 aus Chemiefasern mit einem Titer von 3,3 dtex.

Das Flächengewicht des Nadelvlieses 5 (Nadelfilzes) liegt im Bereich von 600 bis 900 g/m², vorzugsweise im Bereich von 650 bis 850 g/m². Seine Schichtdicke ist mehr oder weniger unkritisch. Sie kann zum Beispiel 2 bis 5 mm betragen.

Das Nadelvlies 5 ist vorzugsweise aus Polyesterfasern oder einer Kombination aus Polyesterfasern und Polypropylenfasern zusammengesetzt, wobei der Anteil der Polyesterfasern im Bereich von 30 bis 85 Gew.-% und der Anteil der Polypropylenfasern im Bereich von 10 bis 30 Gew.-% liegt. Die Bikomponenten-Schmelzklebefasern machen 10 bis 30 Gew.-% des Nadelvlieses 5 aus und haben eine Feinheit, die zweckmäßigerweise im Titerbereich der Chemiefasern des Nadelvlieses liegt. Die Bikomponenten-Schmelzklebefasern sind mit den Chemiefasern im wesentlichen gleichmäßig gemischt.

Der Schaumrücken 6 wird vorzugsweise aus Polyurethanschaum, insbesondere aus PUR-Kaltschaum hergestellt. Er weist ein Raumgewicht im Bereich von 15 bis 70 kg/m³ auf.

Zur Verklebung des Nadelvlieses 5 (Nadelfilzes) mit der Rückseite der Trägerschicht 2 bzw. den Unterschlingen der Polfäden 3 wird vorab ein thermoplastischer Pulverkleber, beispielsweise ein Polyethylen-Pulverkleber auf die Rückseite der Trägerschicht 2 und/oder auf die der Trägerschicht 2 zugewandte Seite des Nadelvlieses 5 aufgesintert. Die Menge des aufgetragenen Pulverklebers wird so gewählt, dass dieser im verfestigten Zustand eine offene, netzartige Struktur bildet.

Bei dem in Fig. 2 dargestellten Teppichformteil 1' sind die Polfäden 3 nicht wie bei herkömmlichen Tufting-teppichen durch einen Latexvorstrich, sondern latexfrei mittels eines thermoplastischen Schmelzklebstoffs in die Trägerschicht 2 eingebunden. Der Schmelzklebstoff basiert dabei auf einer ein thermoplastisches Feinpulver enthaltenden Dispersion, die in der Konsistenz einer Paste beispielsweise mittels eines Pflatschwerkes (nicht gezeigt) auf die Rückseite der Trägerschicht (Tuftträger) 2 aufgetragen wird. Alternativ kann die das thermoplastische Feinpulver enthaltende Dispersion bzw. Paste auch mittels Spritzdüsen oder dergleichen auf die Rückseite der Trägerschicht 2 aufgetragen werden. Nach dem Aufbringen des thermoplastischen Dispersionsklebers wird die Tufting-Rohware einer Heizvorrichtung (nicht gezeigt) zugeführt, in welcher der thermoplastische Schmelzkleber durch Wärmeeinwirkung aktiviert wird, um die Polfäden 3 in der Trägerschicht 2 zu verankern. Auch hier wird die Menge des thermoplastischen Feinpulvers so gewählt, dass der Dispersionskleber im verfestigten Zustand eine akustisch offene, netzartige Struktur bildet. Der thermoplastische Dispersionskleber dient aber nicht nur der Einbindung der Polfäden, sondern darüber hinaus auch der Verklebung des als Sperrschicht wirkenden Nadelvlieses 5 mit den Unterschlingen der Polfäden 3.

Nach der Einbindung der Polfäden 3 wird unmittelbar auf die Rückseite der mit dem thermoplastischen Schmelzkleber versehenen Trägerschicht 2 ein Nadelvlies 5 aufgelegt, das die oben mit Bezug auf Fig. 1 beschriebenen Eigenschaften besitzt.

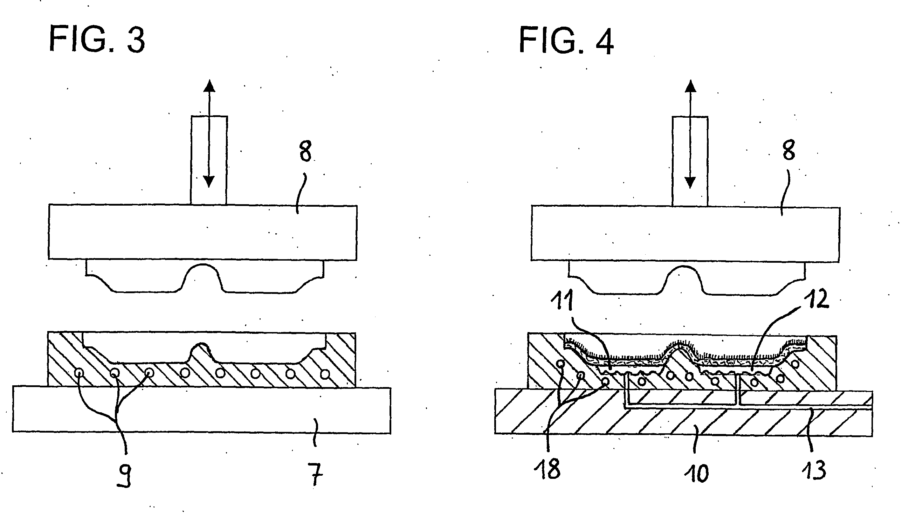

Die Verklebung des Nadelvlieses 5 mit den Unterschlingen der Polfäden 3 bzw, der Rückseite der Trägerschicht 2 erfolgt vor oder während der Umformung von Teppichschicht und Nadelvlies in das Teppichformteil. Vorzugsweise erfolgt diese Verklebung während der Umformung in einem beheizbaren Formwerkzeug, wie es in Fig. 3 schematisch dargestellt ist. Sowohl das Unterwerkzeug 7 als auch das heb- und senkbare Oberwerkzeug 8 sind zum Heißprägen mit einer Heizeinrichtung 9 versehen.

Nach dem gemeinsamen Umformen bzw. Verkleben von Teppichschicht (2, 3) und Nadelvlies 5 wird das umgeformte Zwischenerzeugnis in ein Schäumwerkzeug eingelegt (vgl. Fig. 4). Das Schäumwerkzeug kann aus dem heb- und senkbaren Oberwerkzeug 8 des zum Umformen eingesetzten Formwerkzeuges gemäß Fig. 3 und einem zusätzlichen Unterwerkzeug 10 zusammengesetzt sein. In dem Unterwerkzeug 10 sind gegenüber dem Unterwerkzeug 7 eine oder mehrere Kavitäten 11, 12 ausgebildet, in die über im Unterwerkzeug 10 integrierte Zuleitungen 13 Schaumstoff eingespritzt werden kann. Das Profil der jeweiligen Kavität 11, 12 entspricht beispielsweise dem Profil eines Bodenblechs eines Kraftfahrzeuges, für dessen Verkleidung das Teppichformteil 1, 1' bestimmt ist.

Wie sich der Zeichnung entnehmen lässt, wird das Nadelvlies 5 an einer oder mehreren ausgewählten Stellen partiell hinterschäumt. Die feinen Fasern des Nadelvlieses 5 "bremsen" dabei den eindringenden Schaumstoff und verhindern einen Schaumdurchschlag zu der Sichtseite des Teppichformteils 1, 1'. Der Schaum "verkrallt" sich zumindest in einer Randzone des Nadelvlieses mit diesem. Das Nadelvlies 5 bleibt in jedem Fall zum Schaumstoff rücken 6 hin akustisch offen, so dass letzterer als Schallabsorber für im Fahrgastraum auftretenden störenden Luftschall genutzt werden kann.

Versuche haben gezeigt, dass das Nadelvlies 5 in seinem hinterschäumten Bereich eine wesentlich höhere Steifigkeit aufweist als in seinem nicht hinterschäumten Bereich. Diese durch die Hinterschäumung bewirkte Steifigkeitserhöhung ist von der jeweiligen Dicke des Schaumrückens 6 unabhängig. Es liegt im Rahmen der Erfindung, die durch Hinterschäumung bewirkte Erhöhung der Nadelvliessteifigkeit gezielt zu nutzen. Zum Beispiel lässt sich so die Bauteilsteifigkeit bzw. Trittfestigkeit eines Teppichbodenformteils in bestimmten Teilbereichen selektiv verbessern. Andererseits kann durch gezieltes Fortlassen der Hinterschäumung in einem oder mehreren Bereichen 14, 15 des Teppichformteils 1, 1' die ursprüngliche Flexibilität des Nadelvlieses 5 in diesen Bereichen weitestgehend beibehalten werden, was hinsichtlich der Montage des Teppichformteils 1, 1' sowie des Ausgleichs von Bauteiltoleranzen vorteilhaft ist.

Erfindungsgemäße Versuche haben außerdem ergeben, dass sich mit einem Nadelvlies 5, welches die oben in Bezug auf die Figuren 1 und 2 genannten Eigenschaften aufweist, ein sehr guter, nämlich konturenscharfer Übergang vom Schaumstoff 6 zu der freiliegenden Rückseite des Nadelvlieses 5 ergibt. Bei herkömmlichen hinterschäumten Teppichformteilen kommt es dagegen regelmäßig zu einem unerwünschten seitlichen Verlaufen des Schaumstoffes auf der Abdicht- oder Schwerschichtfolie, wobei der Schaumstoff mitunter über den Rand der Abdicht- bzw. Schwerschichtfolie tritt.

Des weiteren wurde festgestellt, dass es in dem Schaumstoffrücken des erfindungsgemäßen Teppichformteils kaum zu einer Lunkerbildung kommt und der Schaumstoffrücken somit eine hohe Qualität besitzt. Die nur geringe bzw. fehlende Lunkerbildung scheint mit der Luftdurchlässigkeit der feinfaserigen Sperrschicht 5 zusammenzuhängen, die im Gegensatz zu einer luftdichten Abdichtfolie oder Schwerschicht ein gleichmäßigeres Ausgasen des angespritzten Schaumstoffs begünstigt und dadurch hilft, eine Lunkerbildung zu vermeiden.

Das Hinterschäumen des Nadelvlieses 5 wird vorzugsweise in der Weise durchgeführt, dass der fertige Schaumstoffrücken 6 eine zellige Mittelzone 16 und zu seiner Unterseite hin eine zellarme oder zellfreie Randzone 17 aufweist. Die Ausbildung einer solchen Struktur (Integralstruktur) wird durch eine geeignete Temperatursteuerung begünstigt. Das Schaumwerkzeug kann daher mit einer entsprechend steuerbaren Heizeinrichtung 18 ausgerüstet sein (vgl. Fig. 4).

## Patentansprüche

1. **Abdichtfiolien- oder Schwerschichtfolien-freies** Teppichformteil (1, 1') für Kraftfahrzeuge, mit einer textilen, luftdurchlässigen Teppichschicht (2, 3), einer mit der Unterseite der Teppichschicht verbundenen Sperrschicht (5) gegen Schaumdurchschlag und einem an die Sperrschicht angeschäumten Schaumstoffrücken (6), wobei der Schaumstoffrücken durch Hinterschäumen der Sperrschicht in einem Schäumwerkzeug gebildet ist,
**dadurch gekennzeichnet, dass** die Sperrschicht (5) aus einem Nadelvlies oder Nadelfilz besteht, das/der aus Chemiefasern mit einer Feinheit kleiner als 6,7 dtex sowie Bikomponenten-Schmelzklebefasern hergestellt ist, und ein Flächengewicht im Bereich von 600 bis 900 g/m² aufweist.

2. Teppichformteil nach Anspruch 1,
**dadurch gekennzeichnet, dass** die Chemiefasern feiner als 5 dtex, vorzugsweise feiner als 4 dtex sind.

3. Teppichformteil nach Anspruch 1 oder 2,
**dadurch gekennzeichnet, dass** die Sperrschicht (5) ein Flächengewicht im Bereich von 650 bis 850 g/m² aufweist.

4. Teppichformteil nach einem der Ansprüche 1 bis 3,
**dadurch gekennzeichnet, dass** sich die Chemiefasern der Sperrschicht (5) aus Polyesterfasern oder einer Kombination aus Polyesterfasern und Polypropylenfasern zusammensetzen.

5. Teppichformteil nach einem der Ansprüche 1 bis 4,
**dadurch gekennzeichnet, dass** die Sperrschicht (5) 30 bis 85 Gew.-% Polyesterfasern aufweist.

6. Teppichformteil nach einem der Ansprüche 1 bis 5,
**dadurch gekennzeichnet, dass** die Sperrschicht (5) 10 bis 30 Gew.-% Bikomponenten-Schmelzklebefasern aufweist.

7. Teppichformteil nach einem der Ansprüche 1 bis 6,
**dadurch gekennzeichnet, dass** die Sperrschicht (5) 10 bis 30 Gew.-% Polypropylenfasern aufweist.

8. Teppichformteil nach einem der Ansprüche 1 bis 7,
**dadurch gekennzeichnet, dass** die Feinheit der Bikomponenten-Schmelzklebefasern im Bereich der Feinheit der Chemiefasern der Sperrschicht (5) liegt.

9. Teppichformteil nach einem der Ansprüche 1 bis 8,
**dadurch gekennzeichnet, dass** die Teppichschicht eine aus einem Vlies oder Filz bestehende Trägerschicht (2) aufweist, wobei das Vlies oder der Filz aus Polyester- und/oder Polypropylenfasern in Verbindung mit Bikomponenten-Schmelzklebefasern hergestellt ist.

10. Teppichformteil nach einem der Ansprüche 1 bis 9,
**dadurch gekennzeichnet, dass** die Teppichschicht eine textile, luftdurchlässige Trägerschicht (2) mit darin eingearbeiteten Polfäden (3) aufweist, wobei die Sperrschicht (5) mittels eines Polyethylen-Pulverklebers mit den Unterschlingen der Polfäden (3) verklebt ist, und wobei der Kleber im verfestigten Zustand eine offene, netzartige Struktur aufweist.

11. Teppichformteil nach Anspruch 9 oder 10,
**dadurch gekennzeichnet, dass** die Trägerschicht (2) zur Einbindung von Polfäden (3) latexiert ist, wobei der Latex (4) im verfestigten Zustand eine offene, netzartige Struktur aufweist.

12. Teppichformteil nach einem der Ansprüche 1 bis 10,
**dadurch gekennzeichnet, dass** die Teppichschicht eine textile, luftdurchlässige Trägerschicht (2) mit darin eingearbeiteten Polfäden (3) aufweist, wobei die Polfäden (3) mittels eines thermoplastischen Dispersionsklebers latexfrei in die Trägerschicht eingebunden sind, und wobei der thermoplastische Dispersionskleber auch zur Verklebung der Sperrschicht (5) mit den Unterschlingen der Polfäden (3) dient.

13. Teppichformteil nach einem der Ansprüche 1 bis 12,
**dadurch gekennzeichnet, dass** der Schaumstoffrücken (6) aus Polyurethan-Schaumstoff gebildet ist.

14. Teppichformteil nach einem der Ansprüche 1 bis 13,
**dadurch gekennzeichnet, dass** die Sperrschicht (5) an mindestens einer ausgewählten Stelle partiell mit dem Schaumstoffrücken (6) hinterschäumt ist.

15. Teppichformteil nach einem der Ansprüche 1 bis 14,
**dadurch gekennzeichnet, dass** es mindestens einen flexiblen, nichthinterschäumten Bereich (14, 15) und mindestens einen demgegenüber wesentlich steiferen, hinterschäumten Bereich aufweist.

16. Teppichformteil nach einem der Ansprüche 1 bis 15,
**dadurch gekennzeichnet, dass** der Schaumstoffrücken (6) eine zellige Mittelzone (16) und zu seiner Unterseite hin eine zellarme oder zellfreie Randzone (17) aufweist.

17. Verfahren zur Herstellung eines hinterschäumten **Abdicht folien- oder Schwerschichtfolien-freies** Teppichformteils (1, 1') für Kraftfahrzeuge, bei dem die Rückseite einer textilen, luftdurchlässigen Teppichschicht (2, 3) mit einer Sperrschicht (5) gegen Schaumdurchschlag verbunden wird, die Teppichschicht und die Sperrschicht in ein Formwerkzeug (7, 8) eingelegt und zusammen umgeformt werden, und die Sperrschicht anschließend hinterschäumt wird,
**dadurch gekennzeichnet, dass** als Sperrschicht (5) gegen Schaumdurchschlag ausschließlich ein Nadelvlies oder Nadelfilz verwendet wird, das/der aus Chemiefasern mit einer Feinheit von kleiner als 6,7 dtex und Bikomponenten-Schmelzklebefasern hergestellt ist und ein Flächengewicht im Bereich von 600 bis 900 g/m² aufweist.

18. Verfahren nach Anspruch 17,
**dadurch gekennzeichnet, dass** die Sperrschicht (5) mittels eines Polyethylen-Pulverklebers mit der Rückseite der Teppichschicht (2, 3) verklebt wird, wobei die Menge des aufgetragenen Pulverklebers so gewählt wird, dass er im verklebten Zustand eine offene, netzartige Struktur aufweist.

19. Verfahren nach Anspruch 17,
**dadurch gekennzeichnet, dass** die Sperrschicht (5) mittels eines thermoplastischen Dispersionsklebers mit der Rückseite der Teppichschicht (2, 3) verklebt wird, wobei die Menge des aufgetragenen Dispersionsklebers so gewählt wird, dass der Kleber im verfestigten Zustand eine offene, netzartige Struktur aufweist.

20. Verfahren nach einem der Ansprüche 17 bis 19,
**dadurch gekennzeichnet, dass** die das gemeinsame Umformen von Teppichschicht (2, 3) und Sperrschicht (5) durch Heißprägen in einem beheizbaren Formwerkzeug (7, 8) durchgeführt wird.

## Claims

1. A carpet molded part (1, 1') devoid of sealing sheets or heavy layer sheets for motor vehicles, comprising a textile air-permeable carpet layer (2, 3), a barrier layer (5) bonded to the bottom side of the carpet layer against foam breakthrough, and a foam backing (6) foamed onto the barrier layer, wherein said foam backing is formed by foam-backing the barrier layer in a foaming mold;
**characterized in that** said barrier layer (5) consists of a needle-punched nonwoven or needle felt prepared from chemical fibers having a fineness of less than 6.7 dtex and bicomponent hot-melt adhesive fibers, and has a mass per surface area within a range of from 600 to 900 g/m².

2. The carpet molded part according to claim 1, **characterized in that** said chemical fibers have a fineness of less than 5 dtex, preferably less than 4 dtex.

3. The carpet molded part according to claim 1 or 2, **characterized in that** said barrier layer (5) has a mass per surface area within a range of from 650 to 850 g/m².

4. The carpet molded part according to any of claims 1 to 3, **characterized in that** said chemical fibers of the barrier layer (5) are composed of polyester fibers or a combination of polyester fibers and polypropylene fibers.

5. The carpet molded part according to any of claims 1 to 4, **characterized in that** said barrier layer (5) comprises from 30 to 85% by weight of polyester fibers.

6. The carpet molded part according to any of claims 1 to 5, **characterized in that** said barrier layer (5) comprises from 10 to 30% by weight of bicomponent hot-melt adhesive fibers.

7. The carpet molded part according to any of claims 1 to 6, **characterized in that** said barrier layer (5) comprises from 10 to 30% by weight of polypropylene fibers.

8. The carpet molded part according to any of claims 1 to 7, **characterized in that** the fineness of said bicomponent hot-melt adhesive fibers is within the range of the fineness of the chemical fibers of the barrier layer (5).

9. The carpet molded part according to any of claims 1 to 8, **characterized in that** said carpet layer has a carrier layer (2) consisting of a nonwoven or felt, wherein said nonwoven or felt is prepared from polyester and/or polypropylene fibers in connection with bicomponent hot-melt adhesive fibers.

10. The carpet molded part according to any of claims 1 to 9, **characterized in that** said carpet layer has a textile air-permeable carrier layer (2) having pile threads (3) incorporated therein, wherein said barrier layer (5) is bonded to the lower loops of said pile threads (3) by means of a polyethylene powder adhesive, and wherein said adhesive has an open network-like structure in the cured state.

11. The carpet molded part according to claim 9 or 10, **characterized in that** said carrier layer (2) is latex-coated for incorporating pile threads (3), wherein said latex (4) has an open network-like structure in the cured state.

12. The carpet molded part according to any of claims 1 to 10, **characterized in that** said carpet layer has a textile air-permeable carrier layer (2) having pile threads (3) incorporated therein, wherein said pile threads (3) are incorporated in the carrier layer by means of a thermoplastic dispersion adhesive and without latex, and wherein said thermoplastic dispersion adhesive also serves for bonding the barrier layer (5) to the lower loops of said pile threads (3).

13. The carpet molded part according to any of claims 1 to 12, **characterized in that** said foam backing (6) is formed from polyurethane foam.

14. The carpet molded part according to any of claims 1 to 13, **characterized in that** said barrier layer (5) is partially foam-backed with the foam backing (6) at at least one selected site.

15. The carpet molded part according to any of claims 1 to 14, **characterized by** having at least one flexible non-foam-backed zone (14, 15) and at least one foam-backed zone that is substantially more rigid in comparison.

16. The carpet molded part according to any of claims 1 to 15, **characterized in that** said foam backing (6) has a cellular middle zone (16) and, towards its lower side, a low-cell or cell-free marginal zone (17).

17. A process for preparing a foam-backed carpet molded part (1, 1') devoid of sealing sheets or heavy layer sheets for motor vehicles, in which the backside of a textile air-permeable carpet layer (2, 3) is bonded to a barrier layer (5) against foam breakthrough, said carpet layer and said barrier layer are inserted into a mold (7, 8) and formed together, followed by foam-backing said barrier layer,
**characterized in that** a needle-punched nonwoven or needle felt prepared from chemical fibers having a fineness of less than 6.7 dtex and bicomponent hot-melt adhesive fibers and having a mass per surface area within a range of from 600 to 900 g/m² is exclusively used as said barrier layer (5) against foam breakthrough.

18. The process according to claim 17, **characterized in that** said barrier layer (5) is bonded to the backside of said carpet layer (2, 3) by means of a polyethylene powder adhesive, wherein the amount of powder adhesive applied is selected for it to have an open network-like structure in the cured state.

19. The process according to claim 17, **characterized in that** said barrier layer (5) is bonded to the backside of said carpet layer (2, 3) by means of a thermoplastic dispersion adhesive, wherein the amount of dispersion adhesive applied is selected for it to have an open network-like structure in the cured state.

20. The process according to any of claims 17 to 19, **characterized in that** said step of forming the carpet layer (2, 3) and the barrier layer (5) together is performed by hot stamping in a heatable mold (7, 8).

## Revendications

1. Pièce moulée en forme de tapis (1, 1') exempte de feuille d'étanchéité et de feuille de couche masse pour véhicules automobiles, comprenant une couche de tapis (2, 3) textile, perméable à l'air, et une couche barrière (5) liée à la face inférieure de la couche de tapis contre la pénétration de mousse, et une sous-couche de mousse (6) appliquée par moussage sur la couche barrière, la sous-couche de mousse étant formée par surmoulage par moussage de la couche barrière dans un moule écumant,
**caractérisée en ce que** la couche barrière (5) consiste en un non-tissé aiguilleté ou un feutre à l'aiguille préparé à partir de fibres chimiques avec un décitex de moins de 6,7 dtex et de fibres adhésives thermofusibles bicomposées, et ayant une masse surfacique comprise entre 600 et 900 g/m².

2. Pièce moulée en forme de tapis selon la revendication 1, **caractérisée en ce que** les fibres chimiques ont un décitex de moins de 5 dtex, de préférence moins de 4 dtex.

3. Pièce moulée en forme de tapis selon la revendication 1 ou 2, **caractérisée en ce que** la couche barrière (5) a une masse surfacique comprise entre 650 et 850 g/m².

4. Pièce moulée en forme de tapis selon l'une quelconque des revendications 1 à 3, **caractérisée en ce que** les fibres chimiques de la couche barrière (5) sont composées d'une combinaison de fibres de polyester et de fibres de polypropylène.

5. Pièce moulée en forme de tapis selon l'une quelconque des revendications 1 à 4, **caractérisée en ce que** la couche barrière (5) comprend 30 à 85 pour cent en poids de fibres de polyester.

6. Pièce moulée en forme de tapis selon l'une quelconque des revendications 1 à 5, **caractérisée en ce que** la couche barrière (5) comprend 10 à 30 pour cent en poids de fibres adhésives thermofusibles bicomposées.

7. Pièce moulée en forme de tapis selon l'une quelconque des revendications 1 à 6, **caractérisée en ce que** la couche barrière (5) comprend 10 à 30 pour cent en poids de fibres de polypropylène.

8. Pièce moulée en forme de tapis selon l'une quelconque des revendications 1 à 7, **caractérisée en ce que** le décitex des fibres adhésives thermofusibles bicomposées est dans la gamme du décitex des fibres chimiques de la couche barrière (5).

9. Pièce moulée en forme de tapis selon l'une quelconque des revendications 1 à 8, **caractérisée en ce que** la couche de tapis comprend une couche de support (2) constituée par un non-tissé ou un feutre, ledit non-tissé ou feutre étant préparé à partir de fibres de polyester et/ou de polypropylène en combinaison avec des fibres adhésives thermofusibles bicomposées.

10. Pièce moulée en forme de tapis selon l'une quelconque des revendications 1 à 9, **caractérisée en ce que** la couche de tapis comprend une couche de support (2) textile, perméable à l'air, avec des fils de poils (3) incorporés dedans, dans laquelle la couche barrière (5) est collée avec les boucles inférieures des fils de poils (3) à l'aide d'un adhésif en poudre de polyéthylène, et dans laquelle l'adhésif présente une structure ouverte réticulée dans l'état durci.

11. Pièce moulée en forme de tapis selon la revendication 9 ou 10, **caractérisée en ce que** la couche de support (2) est enduite de latex pour l'incorporation des fils de poils (3), dans laquelle le latex (4) présente une structure ouverte réticulée dans l'état durci.

12. Pièce moulée en forme de tapis selon l'une quelconque des revendications 1 à 10, **caractérisée en ce que** la couche de tapis comprend une couche de support (2) textile, perméable à l'air, avec des fils de poils (3) incorporés dedans, dans laquelle les fils de poils (3) sont incorporés dans la couche de support à l'aide d'un adhésif en dispersion thermoplastique et sans recours à du latex, et dans laquelle l'adhésif en dispersion thermoplastique sert également à coller la couche barrière (5) avec les boucles inférieures des fils de poils (3).

13. Pièce moulée en forme de tapis selon l'une quelconque des revendications 1 à 12, **caractérisée en ce que** ladite sous-couche de mousse (6) est formée à partir d'une mousse de polyuréthane.

14. Pièce moulée en forme de tapis selon l'une quelconque des revendications 1 à 13, **caractérisée en ce que** ladite couche barrière (5) est surmoulée par moussage partiellement avec la sous-couche de mousse (6) à au moins un endroit sélectionné.

15. Pièce moulée en forme de tapis selon l'une quelconque des revendications 1 à 14, **caractérisée en ce qu'**elle présente au moins une zone flexible, non surmoulée (14, 15), et au moins une zone surmoulée qui est beaucoup plus rigide en comparaison avec cette première.

16. Pièce moulée en forme de tapis selon l'une quelconque des revendications 1 à 15, **caractérisée en ce que** la sous-couche de mousse (6) présente une zone moyenne cellulaire (16) et une zone marginale (17) pauvre en cellules ou exempte de cellules plus vers sa face inférieure.

17. Procédé de fabrication d'une pièce moulée en forme de tapis (1, 1') surmoulée par moussage et exempte de feuille d'étanchéité et de feuille de couche masse pour véhicules automobiles, dans lequel la face arrière d'une couche de tapis (2, 3) textile, perméable à l'air, est liée avec une couche barrière (5) contre la pénétration de mousse, la couche de tapis et la couche barrière sont insérées dans un moule (7, 8) et remodelées ensemble, et puis la couche barrière est surmoulée par moussage,
**caractérisé en ce qu'**un non-tissé aiguilleté ou un feutre à l'aiguille préparé à partir de fibres chimiques avec un décitex de moins de 6,7 dtex et de fibres adhésives thermofusibles bicomposées, et ayant une masse surfacique comprise entre 600 et 900 g/m², est exclusivement utilisé en tant que couche barrière (5) contre la pénétration de mousse.

18. Procédé selon la revendication 17, **caractérisé en ce que** la couche barrière (5) est collée avec la face arrière de la couche de tapis (2, 3) à l'aide d'un adhésif en poudre de polyéthylène, dans lequel la quantité de l'adhésif en poudre appliquée est choisie de manière qu'il présente une structure ouverte réticulée dans l'état collé.

19. Procédé selon la revendication 17, **caractérisé en ce que** la couche barrière (5) est collée avec la face arrière de la couche de tapis (2, 3) à l'aide d'un adhésif en dispersion thermoplastique, dans lequel la quantité de l'adhésif en dispersion appliquée est choisie de manière qu'il présente une structure ouverte réticulée dans l'état durci.

20. Procédé selon l'une quelconque des revendications 17 à 19, **caractérisé en ce que** l'étape consistant à remodeler la couche de tapis (2, 3) et la couche barrière (5) ensemble est réalisée par impression à chaud dans un moule chauffable (7, 8).
